# EUROPEAN PATENT APPLICATION

(11) **EP 1 705 544 A2**
(43) Date of publication of application: **27.09.2006**
(21) Application number: 05380122.1
(22) Date of filing: 09.06.2005
(51) Int. Cl.: G05D 22/02

(54) **Procedure for continuous regulation of the relative humidity of mixed feed**

(30) Priority: 22.03.2005 ES 200500662
(71) Applicant: Adiveter S.L., 43206 Reues Tarragona (ES)
(72) Inventor: Pintaluba I Mitja, Andreu, 43206 Reues (Tarragona) (ES)
(74) Representative: Canadell-Isern, Roberto

(57) **Abstract**

It consists in the perception of the degree of humidity existing after the product has gone through the grinding stage and after the cooling stage and subsequent granulation.

It is intended for optimum automation of the humidity of mixed feed during its preparation.

## Description

### PURPOSE

This invention refers to a procedure for continuous regulation of the relative humidity of mixed feed.

### FIELD OF THE INVENTION

This is the manufacturing of products for feeding livestock, formed by the selective association of various components and additives suitable for the purpose.

### HISTORY

Various procedures for the preparation of mixed feed are known, where the association of their ingredients is performed automatically, even governed by computers.

Amongst the numerous references available, the following should be mentioned: USA Patent no. 867908 of Kemin Industries, Inc., Spanish Patents no. P8503279 and P9501115 of Mangra, S.A.

One of the relevant aspects of any process for preparing mixed feed consists in the inclusion of a hydrating agent to ensures a convenient relative humidity of the final product. It is important to perform the supply of the hydrating agent and, in particular, the moment in which said supply is carried out.

In the majority of the known procedures the amount of moisturizer introduced into the mixing machine is previously determined. Thus, this amount is added independent of the real conditions of each batch. This system is not satisfactory insofar as the amount of humidity in the mixture is not suitable for the specific situations but is always a set amount and, therefore, is not carried out perfectly with the result of a uniform humidity content in each and all of the parts of the mixed product when it leaves the mixer.

Therefore, a system that permitted obtaining a perfectly homogenous mixed feed and with the required relative humidity was needed.

### BRIEF DESCRIPTION OF THE INVENTION

The procedure of this invention has been designed and successfully tested to reach the purpose, that is, it permits the preparation of mixed feed with the precise degree of humidity, thus continuously controlling the supply of the hydrating agent to ensure this is maintained within the required limits, providing the control system with the humidity sensor reading.

In the new process, the regulation of the relative humidity of the mixture is carried out immediately after passing the ingredients through their respective grinding steps and also at the outlet of the cooling process, after which a new supply of the hydrating agent is made, if necessary.

In order to facilitate the explanation, this description includes sketches in which a performance case of a procedure for continuous regulation of the relative humidity in mixed feed is represented for illustrative and non-limiting purposes, according to the principles of the claims.

### BRIEF DESCRIPTION OF THE DRAWING

Figure 1 is the diagram of the described procedure and schematically shows the devices used and their respective functions.
Figures 2 and 3 represent the diagrams corresponding to respective exclusive performance of the process.

### DETAILED DESCRIPTION OF THE INVENTION

The elements designated with numbers in the drawings correspond to the parts indicated below, pertaining to two optional variations of the performance.

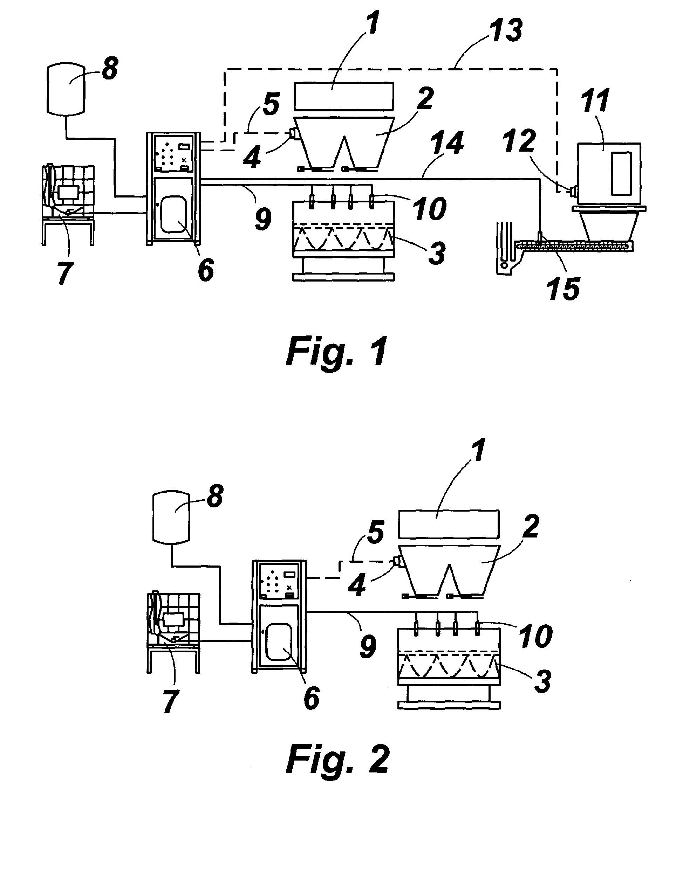

First variation (figure 2): The ingredients constituting the mixed feed, after passing through their respective mills 1 and hoppers 2, are sent to the mixer 3 where their homogenous association is carried out.

In the hoppers 2 the sensor or group of sensors 4 receive the degree of humidity of the entering ingredients and send, through the line 5, an information signal to the dosage and control equipment 6, which is adjusted to a set value or interval between two limit values of the humidity established for the inlet passage.

The equipment 6 controls a humidifier device consisting of a tank 7 of a product that, associated to the water contained in an adjoining tank 8, constitutes the hydrating agent. This, also controlled by the equipment 6 and by the piping 7, is sent to sprinklers or sprayers 10 supplying the liquid to the entrance of the mixer 3.

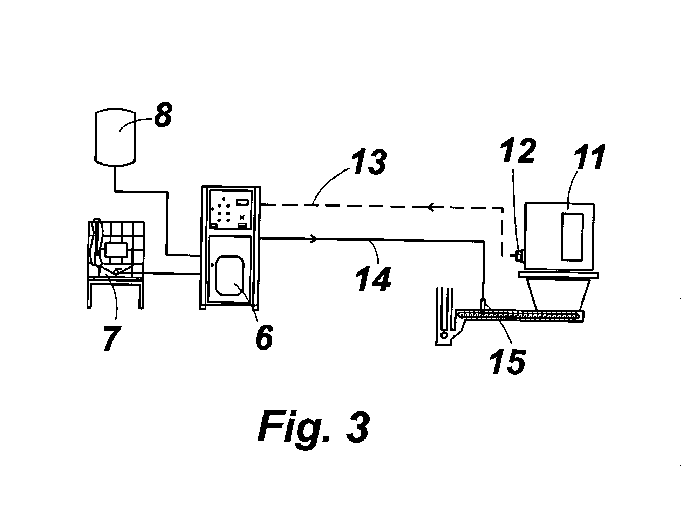

Second variation (figure 3): The cooler 11, associated to a granulating device (not represented), includes a sensor 12 at its outlet, which sends an information signal through the line 13 to the dosage and control equipment 6, applied control order generator, to the humidifying device 7, 8, and through the line 14 to the sprinkler or sprayer 15 located at the outlet of the product.

In this way, with the double alternating regulation of the supply of the hydrating agent to the flow of the materials throughout their passage through the mixture and conditioning installation, a product with constant and uniform relative humidity is easily obtained at the outlet and the losses normally produced during the production process of mixed feed are also compensated.

The equipment 6, on receiving the signals sent by the sensors 4 and 13, executes in each case an algorithm to determine, according to the value or interval of the previously established set point, the amount of the diluted hydrating agent needed to be added to the ingredients to be mixed and, also, to the material leaving the cooler. The result is that the granulating process is optimized.

According to the characteristics of the ingredients to be mixed and of the final product, the described dosage and control system could be exclusively applied to next step that is the grinding (figure 2) or to the cooling stage of the product (figure 3) after its granulating.

## Claims

1. Procedure for continuous regulation of the relative humidity of mixed feed, intended to ensure an optimum and uniform level of the degree of humidity existing at the outlet of the product in an automatic installation producing mixed feed, **characterized by** the fact it includes the perception of the degree of humidity existing precisely at the outlet of the grinding stage (1, 2) and delivery of the ingredients before they are mixed and, at the same time, precisely at the outlet of the material cooling stage (11) after its granulation.

2. Procedure for continuous regulation of the relative humidity of mixed feed, according to claim 1, **characterized by** the fact the perception of the degree of humidity is made by sensors (4, 12) respectively associated to the delivery hoppers (2) next to the mills (1) of the ingredients and the cooling device (11) associated to the granulating stage. Said sensors (4, 12) are coupled by piping lines (5, 13) to a dosage and control equipment (6) associated to a hydrating device.

3. Procedure for continuous regulation of the relative humidity of mixed feed, according to claims 1 and 2, **characterized by** the fact the hydrating device includes a tank (7) of a hydrating device and an adjoining water tank (8), both coupled to two dosage and control equipment (6), and a group of sprayers (10) associated to the mixing step (3) and at least one sprayer (15) associated to the cooling stage (11).
